# FASCICULE DE BREVET EUROPEEN

(11) **EP 1 261 889 B1**
(45) Date de publication et mention de la délivrance du brevet: **24.05.2006**
(21) Numéro de dépôt: 01907611.6
(22) Date de dépôt: 17.01.2001
(51) Int. Cl.: G02B 6/44

(54) **DISPOSITIF D'IDENTIFICATION VISUELLE DE CABLAGES OU CONDUITS**
VISUELLE IDENTIFIKATIONSVORRICHTUNG FÜR KABEL ODER RÖHREN
DEVICE FOR VISUAL IDENTIFICATION OF CABLES OR CONDUITS

(30) Priorité: 06.03.2000 FR 0002865
(43) Date de publication de la demande: 04.12.2002
(73) Titulaire: Brunet, Patrice, 69270 Fontaines Sur Saône (FR); Tande, Eric, 69660 Collonges au Mont d'Or (FR)
(72) Inventeur: Brunet, Patrice, 69270 Fontaines Sur Saône (FR); Tande, Eric, 69660 Collonges au Mont d'Or (FR)
(74) Mandataire: Bratel, Gérard
(86) Numéro de dépôt international: PCT/FR2001/000144
(87) Numéro de publication internationale: WO 2001/067150

(56) Documents cités:
- WO-A1-94/19702
- US-A- 5 463 706
- US-A- 5 625 735
- US-A- 5 666 453

## Description

La présente invention concerne un dispositif destiné à l'identification visuelle de câblages ou de conduits. Plus particulièrement, cette invention a pour objet un dispositif qui vise à faciliter le repérage des extrémités de cordons, fils ou câbles utilisés dans les domaines électrique, électronique, téléphonique, informatique, automatique, etc..., ou encore le repérage des extrémités de conduits, rigides ou flexibles, parcourus par des fluides et pouvant appartenir à des installations hydrauliques ou penumatiques ou autres.

Dans divers domaines techniques, utilisant des réseaux de fils, câbles ou conduits relativement nombreux, il se pose le problème pratique de pouvoir, à partir de la connaissance de la position d'une extrémité d'un fil, câble ou conduit, identifier la position de l'autre extrémité du même fil, câble ou conduit, ceci d'une manière précise et certaine. Tel est le cas, notamment, des cordons dits de « brassage » informatique, logés dans une armoire ou un coffret, des systèmes de « jarretiérage » téléphonique, ou des fils et câbles de câblage électrique, qu'il s'agisse de fils véhiculant des signaux de données, ou de câbles de puissance...

Plus particulièrement, dans le cas des armoires dites de « brassage » des liaisons informatiques, des cordons de « brassage » sont passés en grand nombre entre les matériels informatiques actifs et les panneaux de brassage, et il est très difficile de suivre sur toute sa longueur un cordon, depuis l'une de ses extrémités, pour trouver son autre extrémité et ainsi faire le lien entre une prise de numéro donné du câblage de distribution et un numéro de port d'un matériel actif.

Les possibilités actuelles de repérage des tenants et aboutissants d'un câble ou d'un cordon sont les suivantes :
- La méthode la plus simple et la plus directe est le suivi « physique », visuel et par le toucher. Ce premier procédé est toutefois peu pratique, et source d'erreurs, dans le cas de cordons nombreux et entremêlés.
- Un autre procédé consiste à effectuer un marquage des câbles ou cordons à leurs deux extrémités, par étiquetage. Chaque extrémité de câble ou cordon est ainsi théoriquement identifiée, mais il existe une difficulté évidente de repérage rapide de l'extrémité d'un cordon mis en place (parmi une multiplicité de cordons).
- Il est aussi possible de distinguer les câbles ou cordons par des colorations extérieures distinctes, mais ce procédé n'offre pas de possibilités suffisantes, le nombre maximum de couleurs disponibles étant de l'ordre d'une dizaine.
- Un autre procédé peut consister à débrancher les câbles ou cordons, pour les identifier en fonction des conséquences du débranchement, mais ceci impose l'arrêt temporaire du fonctionnement du système relié au câble ou cordon débranché, arrêt qui dans de nombreux cas, ne peut être admis.
- Une solution technique disponible consiste en un logiciel et une base de données spécifiques. Cette solution est toutefois lourde à gérer, source d'erreurs lors des mises à jour, et très onéreuse.
- Il est aussi possible de mettre en oeuvre un système d'acquisition automatique, mais cette dernière solution, impliquant le rajout d'un conducteur électrique dans chaque câble ou cordon, est source de perturbations électromagnétiques lors de l'injection d'un signal électrique dans le conducteur addditionnel.

Le document US 5666453 A décrit des cordons ou câbles à fibres optiques, pourvus d'un système de repérage des extrémités au moyen de diodes électro-luminescentes, alimentées par des conducteurs électriques incorporés dans ces cordons ou câbles. Cette solution nécessite donc l'incorporation de circuits électriques, et de composants spécifiques tels que diodes électro-luminescentes, sur tous les cordons ou câbles à repérer. Ainsi, une telle solution est particulièrement coûteuse, compte tenu du nombre élevé de câbles ou cordons devant être équipés. De plus, les conducteurs électriques de ce système peuvent créer des pertubations électromagnétiques.

Le document US 5625735 A, ou son équivalent FR 2725796 A, décrit une solution optique, appliquée à des cordons à fibres optiques pour déterminer l'orientation du plan de polarisation de l'extrémité de la fibre optique, en vue de sa connexion correcte. Ce document ne vise donc pas le repérage ou l'identification d'extrémités de câbles ou cordons, ce qui le rend étranger aux buts de la présente invention.

Le document WO 94/19702 A1 décrit, en tant que variante (page 12, lignes 9 à 15), un dispositif d'identification visuelle pour câble comprenant une fibre optique insérée dans le câble et ayant au moins une extrémité recourbée sur elle-même.

Cette extrémité est utilisée pour la restitution de la lumière injectée dans la fibre optique et transmise par celle-ci. Plus particulièrement, la restitution de la lumière s'effectue ici par éclairement de la surface du coude formé par la fibre optique. Le document ne précise pas si la fibre optique est aussi recourbée à son autre extrémité.

Enfin, le document US 5463706 A enseigne que l'injection de lumière peut se faire latéralement au niveau d'un coude formé sur une fibre optique. Ce coude est éloigné des extrémités de la fibre optique, et le résultat est l'éclairement de la fibre optique sur toute sa longueur.

La présente invention vise à éliminer les inconvénients de tous les procédés ou moyens actuels, rappelés ci-dessus, en fournissant un dispositif permettant une identification certaine d'extrémités de cordons, fils, câbles, conduits et analogues, quel que soit leur nombre et leur agencement, sans interruption de la liaison réalisée par ces cordons, fils, câbles ou conduits, donc sans arrêt du fonctionnement des systèmes raccordés, et sans perturbations électromagnétiques ou autres, et ceci d'une manière particulièrement simple et économique.

A cet effet, l'invention a pour objet un dispositif comprenant :
(a) une pluralité de cordons, fils, câbles ou conduits,
(b) des connecteurs prévus aux deux extrémités desdits cordons, fils, câbles ou conduits et
(c) au moins une fibre optique sur ou dans chacun desdits cordons, fils, câbles ou conduits, s'étendant d'une extrémité à l'autre extrémité dudit cordon, fil, câble ou conduit, une première extrémité de la fibre optique étant accessible à l'extrémité correspondante du cordon, fil, câble ou conduit, de manière à pouvoir être éclairée par un moyen d'injection de lumière, et la deuxième extrémité de cette fibre optique étant accessible à l'autre extrémité du même cordon, fil, câble ou conduit, de manière à pouvoir restituer la lumière injectée à la première extrémité, caractérisé en ce que chacune des extrémités de chaque fibre optique est recourbée et forme un coude qui est noyé dans lesdits connecteurs.

Ainsi, l'invention est fondée sur l'incorporation de moyens optiques, qui permettent par émission lumineuse à une extrémité du cordon, fil, câble ou conduit concerné, d'identifier l'autre extrémité du même cordon, fil, câble ou cordon, par apparition d'un signal lumineux facilement reconnaissable, à cette autre extrémité.

Un tel dispositif d'identification possède de nombreux avantages :
- En premier lieu, il permet une identification sûre, sans risque d'erreur, et immédiatement interprétable, quels que soient la longueur et le trajet du cordon ou autre, dont l'extrémité est recherchée, et quel que soit le nombre total des cordons ou autres.
- Le repérage de l'extrémité du cordon ou autre se fait sans débranchement de celui-ci, donc sans interruption de la liaison électrique ou fluidique, et pendant le fonctionnement (lui aussi ininterrompu) du système relié.
- L'utilisation de signaux purement optiques évite toutes perturbations électromagnétiques.
- Les cordons ou autres, équipés de fibres optiques, peuvent être « banalisés », c'est-à-dire qu'il n'est plus nécessaire de les différencier par des couleurs particulières ou par des étiquettes personnalisées, ce qui rend le système proposé particulièrement simple et économique.
- Le système proposé ne nécessite, sur les cordons, ni conducteurs électriques additionnels, ni composants actifs tels que diodes électro-luminescentes, ce qui contribue à sa simplicité et à son faible coût.
- Une simplicité supplémentaire de structure et d'utilisation résulte de ce que le dispositif est parfaitement « réversible », les deux extrémités des cordons ou autres, et de leurs fibres optiques, étant conformées de façon identique, et la lumière pouvant être injectée indifféremment à l'une ou l'autre de ces deux extrémités.
- Le dispositif proposé ne nécessite aucune modification ou adaptation des systèmes auxquels sont raccordables les cordons ou autres. Ce dispositif est ainsi indépendant des constructeurs de tels systèmes.
- Enfin, le dispositif objet de l'invention ne nécessite, dans son principe, aucun système électronique complexe et coûteux, tout en étant compatible avec l'utilisation (si cela est souhaité) de moyens opto-électroniques aptes à recevoir et interpréter le signal lumineux transmis par la ou les fibres optiques.

Selon une caractéristique de l'invention, la ou chaque fibre optique, incorporée au cordon, fil, câble ou conduit concerné, possède des extrémités recourbées. Les deux extrémités de chaque fibre optique sont ainsi convenablement orientées, d'une part pour permettre de réaliser commodément l'injection de lumière à une extrémité du cordon ou autre, et d'autre part, pour émettre un signal lumineux bien visible à l'autre extrémité du même cordon ou autre, alors que les deux extrémités de celui-ci sont connectées.

De plus, selon l'invention, les extrémités recourbées de la ou chaque fibre optique sont noyées dans des connecteurs prévus aux deux extrémités du cordon, fil, câble ou conduit concerné. Ainsi, les extrémités des fibres optiques peuvent, dans le cas de cordons de brassage informatique, être noyées dans des connecteurs normalisés, par exemple du type « RJ 45 », habituellement placés aux extrémités de tels cordons.
- Avantageusement, deux fibres optiques sont disposées parallèlement dans ou sur le cordon, fil, câble ou conduit concerné, les extrémités respectives de ces deux fibres optiques étant recourbées dans des directions diamétralement opposées. Ceci permet dans tous les cas une accessibilité aisée à l'extrémité d'au moins l'une des fibres optiques, tant pour l'injection de lumière que pour la visibilité du signal lumineux émis, quelle que soit l'orientation de l'extrémité correspondante du cordon ou autre.

Le moyen d'injection de lumière, à l'extrémité d'une fibre optique, est notamment réalisable sous la forme d'un accessoire mobile, constitué d'un corps ou boîtier recevant une source d'énergie électrique, qui est prolongé par un élément allongé, de préférence flexible, à l'extrémité duquel est placée une ampoule électrique, ou une autre source lumineuse équivalente. Avantageusement, cette extrémité porte en outre un élément terminal creux de forme générale conique, intérieurement réfléchissant, qui est prévu pour recouvrir une extrémité d'un cordon, fil, câble ou conduit, dans lequel doit être injectée la lumière. L'accessoire peut ainsi être adapté sur l'extrémité du cordon ou autre, en recouvrant cette extrémité et en y focalisant les rayons lumineux émis par l'ampoule électrique, de manière à concentrer la lumière sur l'extrémité de la fibre optique située à cette extrémité du cordon, sans éclairer les extrémités des cordons voisins et de leurs fibres optiques.

Il est envisageable d'utiliser, de façon simultanée, deux ou plusieurs moyens d'injection de lumière, de conception identique mais émettant des lumières de couleurs distinctes, de manière à repérer simultanément, et sans risque de confusion, les extrémités de deux ou plusieurs cordons.

Avantageusement, l'accessoire mobile pour l'injection de lumière possède un moyen d'accrochage, tel qu'une pince, permettant de le maintenir sur un cordon ou sur un autre élément fixe, ce qui libère les mains de l'opérateur lors d'une intervention.

L'invention sera mieux comprise à l'aide de la description qui suit, en référence au dessin schématique annexé représentant, à titre d'exemples, quelques formes d'exécution de ce dispositif d'identification visuelle de câblages ou conduits :
- figure 1 représente, très schématiquement, une armoire de « brassage » de liaisons informatiques, utilisant le dispositif objet de la présente invention ;
- figure 2 représente un cordon de brassage informatique, équipé selon l'invention avec une fibre optique ;
- figure 3 est une vue en perspective d'une région d'extrémité de ce cordon, avec indication d'un moyen d'injection de lumière, en cours d'utilisation ;
- figure 4 est une vue en coupe partielle, longitudinale, suivant la ligne IV-IV de la figure 3 ;
- figure 5 représente une variante de cordon, équipée selon l'invention de deux fibres optiques.

L'invention est décrite ci-après, et illustrée au dessin, dans le cadre de son application particulière au repérage des extrémités de cordons de brassage informatique, dans une armoire de brassage.

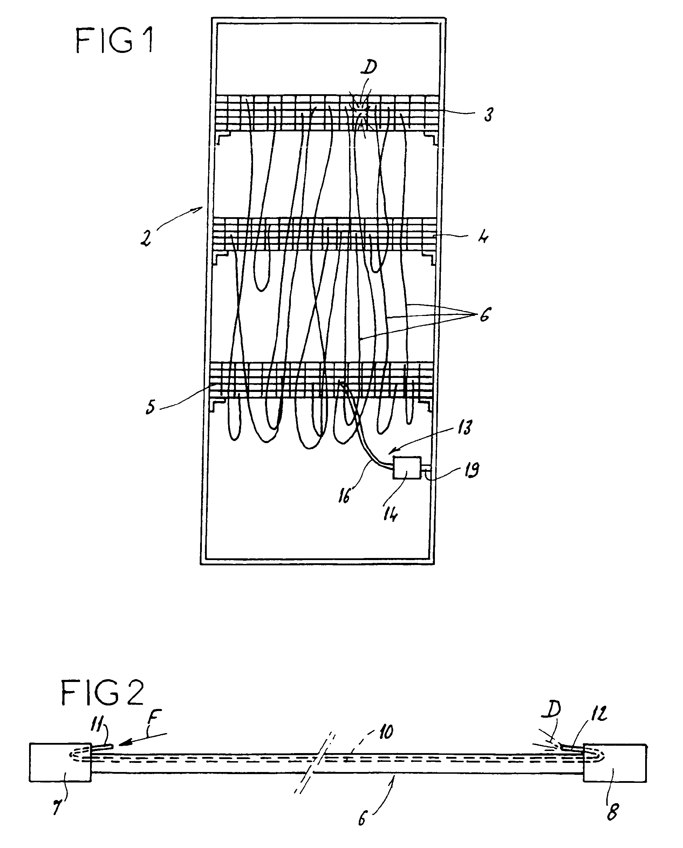

La figure 1 représente, très schématiquement, une telle armoire de brassage informatique, désignée globalement par le repère 2. Cette armoire de brassage 2 contient des matériels informatiques 3, 4, 5, actifs ou à rôle de distribution, reliés entre eux par des cordons de brassage 6, en nombre habituellement élevé. De manière connue, chaque cordon de brassage 6 possède, à ses deux extrémités, des connecteurs respectifs 7 et 8, tels que des connecteurs normalisés de type « RJ 45 », permettant le raccordement des matériels informatiques 3, 4, 5 - voir aussi figure 2.

Selon l'invention, et comme le montrent les figures 2 à 4, chaque cordon de brassage 6 comporte, outre le ou les conducteurs électriques classiques 9 s'étendant d'un connecteur 7 à l'autre 8, au moins une fibre optique 10 qui, elle aussi, s'étend sur toute la longeur de ce cordon 6, d'une extrémité à l'autre de celui-ci.

La fibre optique 10, placée dans la gaine extérieure du cordon 6, possède une première extrémité 11 de forme recourbée, partiellement noyée dans le premier connecteur d'extrémité 7 du cordon 6. De manière analogue, la fibre optique 10 possède une deuxième extrémité 12 de forme recourbée, partiellement noyée dans le deuxième connecteur d'extrémité 8 du cordon 6.

Ainsi, une injection de lumière selon la flèche F, face à la première extrémité recourbée 11 de la fibre optique 10, à l'extrémité du cordon 6 pourvue du premier connecteur 7, s'accompagne d'une diffusion lumineuse D par la deuxième extrémité recourbée 12 de la fibre optique 10. La deuxième extrémité 12 de la fibre optique 10 est ainsi facilement repérée par un signal lumineux éventuellement de couleur, ceci sans risque d'erreur et sans nécessité de débranchement du cordon 6, même si celui-ci est environné de nombreux autres cordons similaires.

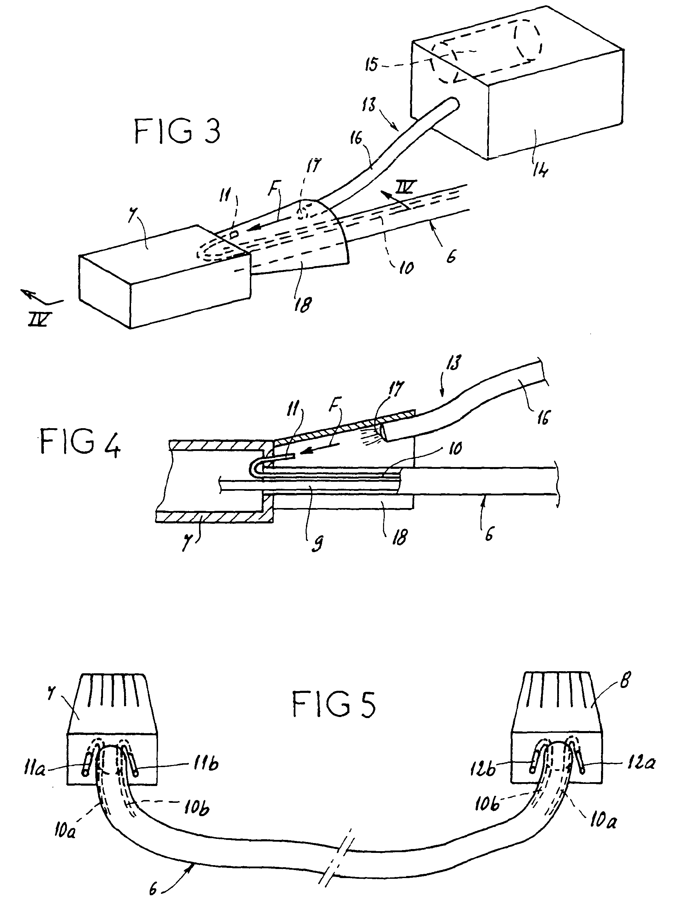

Pour réaliser l'injection de lumière à une extrémité du cordon 6, il est fait ici utilisation d'un accessoire mobile, désigné globalement par le repère 13, suggéré sur la figure 1 est représenté en détail aux figures 3 et 4. L'accessoire 13 pour l'injection de lumière comprend un corps ou boîtier 14 recevant une source d'énergie, constituée par exemple par une ou plusieurs piles électriques 15. Le corps 14 est prolongé par un élément allongé flexible 16, à l'extrémité libre duquel est placée une petite ampoule électrique 17, alimentée par la ou les piles 15. A son extrémité libre, l'élément allongé flexible 16 porte encore un élément terminal creux 18 de forme conique, fendu longitudinalement, qui peut être engagé autour de l'extrémité du cordon 6, contre le connecteur 7 et/ou sur ce connecteur 7. L'élément terminal conique 18 possède une surface intérieure réfléchissante.

Ainsi, l'accessoire 13 peut être adapté sur la première extrémité du cordon 6 sélectionné, puis, l'ampoule électrique 17 étant éclairée, un faisceau lumineux est émis et concentré sur l'extrémité 11 de la fibre optique 10, appartenant au seul cordon 6 sélectionné.

Le corps ou boîtier 14 de l'accessoire 13 pour l'injection de lumière porte encore, avantageusement, une pince 19 ou un autre moyen d'accrochage, comme suggéré sur la figure 1, permettant son maintien temporaire sur un cordon 6 ou sur une partie de l'armoire de brassage 2.

La figure 5 illustre une variante du dispositif selon l'invention, dans laquelle deux fibres optiques 10a et 10b sont disposées parallèlement dans le même cordon de brassage 6. A une extrémité du cordon 6, pourvue d'un premier connecteur 7, les extrémités respectives 11a et 11b des deux fibres optiques 10a et 10b sont recourbées dans des directions diamétralement opposées. De même, à l'autre extrémité du cordon 6 pourvue d'un deuxième connecteur 8, les extrémités respectives 12a et 12b des deux fibres optiques 10a et 10b sont recourbées dans des directions diamétralement opposées. Ainsi, quelle que soit l'orientation des connecteurs 7 et 8, on dispose facilement, respectivement aux deux extrémités du cordon 6, d'au moins une extrémité 11a ou 11b de fibre optique accessible pour l'injection de lumière, et d'au moins une extrémité 12a ou 12b de fibre optique visible, pouvant émettre un signal lumineux qui sera correctement perçu.

L'on ne s'éloignerait pas du cadre de l'invention, telle que définie dans les revendications annexées :
- en incorporant des fibres optiques plus ou moins nombreuses, à l'intérieur des cordons ou à leur périphérie ;
- en utilisant d'autres moyens pour l'injection de lumière dans les fibres optiques ;
- en appliquant le dispositif à des cordons, fils, câbles et similaires de tous genres, ou encore à des conduits de fluides ;
- en réalisant ces cordons avec des connecteurs électriques ou fluidiques de tout type.

## Revendications

1. Dispositif comprenant :
(a) une pluralité de cordons, fils, câbles ou conduits (6),
(b) des connecteurs (7, 8) prévus aux deux extrémités desdits cordons, fils, câbles ou conduits (6) et
(c) au moins une fibre optique (10) sur ou dans chacun desdits cordons, fils, câbles ou conduits (6), s'étendant d'une extrémité (7) à l'autre extrémité dudit cordon, fil, câble ou conduit (6), une première extrémité (11) de la fibre optique (10) étant accessible à l'extrémité correspondante (7) du cordon, fil, câble ou conduit (6), de manière à pouvoir être éclairée par un moyen d'injection de lumière (13), et la deuxième extrémité (12) de cette fibre optique (10) étant accessible à l'autre extrémité (8) du même cordon, fil, câble ou conduit (6), de manière à pouvoir restituer la lumière injectée à la première extrémité (7), **caractérisé en ce que** chacune des extrémités (11, 12) de chaque fibre optique (10) est recourbée et forme un coude qui est noyé dans lesdits connecteurs (7, 8).

2. Dispositif selon la revendication 1, disposant de deux fibres optiques (10a, 10b) qui sont disposées parallèlement dans ou sur le cordon, fil, câble ou conduit (6), **caractérisé en ce que** les extrémités respectives (11a, 11b, 12a, 12b) de ces deux fibres optiques (10a, 10b) sont recourbées dans des directions diamétralement opposées.

3. Dispositif selon la revendication 1 ou 2, comprenant un moyen d'injection de lumière (13) disposé à l'extrémité d'une fibre optique (10) est réalisé sous la forme d'un accessoire mobile (13), constitué d'un corps ou boîtier (14) recevant une source d'énergie électrique (15), qui est prolongé par un élément allongé (16), de préférence flexible, à l'extrémité duquel est placée une ampoule électrique (17), ou autre source lumineuse.

4. Dispositif selon la revendication 3, **caractérisé en ce que** l'extrémité de l'élément allongé (16) de l'accessoire mobile (13), constituant le moyen d'injection de lumière, porte un élément terminal creux (18) de forme générale conique, intérieurement réfléchissant, qui est prévu pour recouvrir une extrémité (7) d'un cordon, fil, câble ou conduit (6), dans lequel doit être injectée la lumière.

5. Dispositif selon la revendication 3 ou 4, **caractérisé en ce que** l'accessoire mobile (13), constituant le moyen d'injection de lumière, possède un moyen d'accrochage, tel qu'une pince (19), permettant de la maintenir sur un cordon (6) ou sur un autre élément fixe (2).

6. Utilisation du dispositif selon l'une quelconque des revendications 1 à 5, au repérage des extrémités de cordons (6) de "brassage" informatique, dans une armoire (2) ou un coffret de "brassage".

7. Cordon, fil, câble ou conduit (6), sur ou dans lequel s'étend au moins une fibre optique (10), s'étendant d'une extrémité à l'autre extrémité dudit cordon, fil, câble ou conduit (6), comprenant des connecteurs (7, 8) à ces deux extrémités, **caractérisé en ce que** chacune des extrémités (11, 12) de la ou chaque fibre optique (10) est recourbée et forme un coude qui est noyé dans l'un des connecteurs (7, 8), ledit cordon, fil, câble ou conduit (6) étant destiné au dispositif selon l'une quelconque des revendications 1 à 6.

## Claims

1. Device comprising:
a) a plurality of leads, wires, cables or conduits (6),
b) connectors (7,8) which are provided at the two ends of said leads, wires, cables or conduits (6) and
c) at least one optical fiber (10) extending in or on each of said leads, wires, cables or conduits (6), from one end (7) of said lead, wire, cable or conduit (6) to the other end, a first end (11) of the optical fiber (10) being accessible at the corresponding end (7) of the lead, wire, cable or conduit (6), so as to be able to be illuminated by a light injection means (13), and the second end (12) of this optical fiber (10) being accessible at the other end (8) of the same lead, wire, cable or conduit (6) so as to be able to recover the light injected at the first end (7), **characterized in that** each end (11,12) of each optical fiber (10) is bent back and forms a bend which is embedded in said connectors (7,8).

2. Device as claimed in claim 1, comprising two optical fibers (10a, 10b) which are placed parallel to each other in or on the lead, wire, cable or conduit (6), **characterized in that** the respective ends (11 a, 11 b; 12a, 12b) of these two optical fibers (10a,10b) are bent back in diametrically opposed directions

3. Device as claimed in claim 1 or 2, comprising means for injecting light (13) placed at the end of an optical fiber (10) which are produced in the form of a moveable accessory (13) consisting of a body or casing (14) accommodating an electrical power supply (15), which is extended by a preferably flexible elongate element (16), at the end of which an electric light bulb (17) or other light source is placed.

4. The device as claimed in claim 3, **characterized in that** the end of the elongate element (16) of the moveable accessory (13), constituting the light injection means, carries a hollow terminal element (18) of conical general shape, which is internally reflective and is designed to cover one end (7) of a lead, wire, cable or conduit (6) into which the light has to be injected.

5. The device as claimed in claim 3 or 4, **characterized in that** the moveable accessory (13) constituting the light infection means possesses a fastening means, such as a clamp (19), allowing it to be held onto a lead (6) or onto another, stationary element.

6. Use of the device as claimed in any one of claims 1 to 5 for the locating of the ends of computer "jumper" leads (6) in a "jumper" case (2) or cabinet.

7. Lead, wire, cable or conduit (6), in or on which at least one optical fiber (10) extends from one end to the other end of said lead, wire, cable or conduit (6), comprising connectors (7,8) at said two ends, **characterized in that** each end (11,12) of the or each optical fiber (10) is bent back and forms a bend which embedded in one of the connectors (7,8), said lead, wire, cable or conduit (6) being intended for the device as claimed in any one of claims 1 to 6.

## Patentansprüche

1. Vorrichtung umfassend:
a) eine Vielzahl von Litzen, Drähten, Kabeln oder Leitungen (6),
b) Steckverbinder (7, 8), die an den beiden Enden dieser Litzen, Drähte, Kabel oder Leitungen (6) vorgesehen sind, und
c) mindestens eine Lichtleitfaser (10) auf oder in jeder dieser Litzen, Drähte, Kabel oder Leitungen (6), die sich von einem Ende (7) zum anderen Ende dieser Litze, dieses Drahtes, dieses Kabels oder dieser Leitung (6) erstreckt, wobei ein erstes Ende (11) dieser Lichtleitfaser (10) am entsprechenden Ende (7) der Litze, des Drahtes, des Kabels oder der Leitung (6) in der Weise zugänglich ist, dass es durch ein Mittel (13) zum Einstrahlen von Licht erhellt werden kann, und wobei das zweite Ende (12) dieser Lichtleitfaser (10) am anderen Ende (8) derselben Litze, desselben Drahtes, desselben Kabels oder derselben Leitung (6) in der Weise zugänglich ist, dass das am ersten Ende (7) eingestrahlte Licht aufgefangen werden kann, **dadurch gekennzeichnet, dass** jedes der Enden (11, 12) jeder Lichtleitfaser (10) umgebogen ist und ein Winkelstück bildet, das in die Steckverbinder (7, 8) eingefügt ist.

2. Vorrichtung nach Anspruch 1, die zwei Lichtleitfasern (10a, 10b) aufweist, die parallel in oder auf der Litze, dem Draht, dem Kabel oder der Leitung (6) angeordnet sind, **dadurch gekennzeichnet, dass** die jeweiligen Enden (11a, 11b; 12a, 12b) dieser zwei Lichtleitfasern (10a, 10b) in diametral entgegengesetzte Richtungen umgebogen sind.

3. Vorrichtung nach Anspruch 1 oder 2, **dadurch gekennzeichnet, dass** das Mittel (13) zum Einstrahlen von Licht, das am Ende einer Lichtleitfaser (10) angeordnet ist, in Form eines beweglichen Zusatzgeräts (13) realisiert ist, das aus einem Körper oder einem Gehäuse (14) besteht, das eine Stromquelle (15) aufnimmt, die durch ein längliches, vorzugsweise biegsames Element (16) verlängert ist, an dessen Ende eine Glühlampe (17) oder eine andere Lichtquelle sitzt.

4. Vorrichtung nach Anspruch 3, **dadurch gekennzeichnet, dass** das Ende des länglichen Elements (16) des beweglichen Zusatzgeräts (13), das das Mittel zum Einstrahlen von Licht bildet, ein hohles, im Innern reflektierendes Endelement (18) in allgemein konischer Form trägt, das vorgesehen ist, um ein Ende (7) einer Litze, eines Drahtes, eines Kabels oder einer Leitung (6) zu überdecken, in welches das Licht eingestrahlt werden soll.

5. Vorrichtung nach Anspruch 3 oder 4, **dadurch gekennzeichnet, dass** das bewegliche Zusatzgerät (13), das das Mittel zum Einstrahlen von Licht ist, eine Vorrichtung zum Einhängen hat, wie etwa eine Klemme (19), mit der sie auf einer Litze (6) oder auf einem anderen festen Element (2) gehalten werden kann.

6. Verwendung der Vorrichtung nach einem der Ansprüche 1 bis 5 zur Ortsbestimmung der Enden von Leitungen (6) einer Daten-Verteilung in einem Verteiler-Schrank (2) oder Verteiler-Kasten.

7. Litze, Draht, Kabel oder Leitung (6), auf der oder in der sich mindestens eine Lichtleitfaser (10) von einem Ende zum anderen Ende dieser Litze, dieses Drahtes, dieses Kabels oder dieser Leitung (6) erstreckt, Steckverbinder (7, 8) an diesen zwei Enden umfassend, **dadurch gekennzeichnet, dass** jedes der Enden (11, 12) der oder jeder Lichtleitfaser (10) umgebogen ist und ein Winkelstück bildet, das in einen der Steckverbinder (7, 8) eingefügt ist, wobei diese Litze, dieser Draht, dieses Kabel oder diese Leitung (6) für die Vorrichtung nach einem der Ansprüche 1 bis 6 bestimmt ist.
